# EUROPEAN PATENT APPLICATION

(11) **EP 1 837 534 A2**
(43) Date of publication of application: **26.09.2007**
(21) Application number: 07104559.5
(22) Date of filing: 21.03.2007
(51) Int. Cl.: F16C 11/06, F16C 23/04

(54) **Titanium spherical plain bearing with liner and treated surface**

(30) Priority: 21.03.2006 US 784161 P
(71) Applicant: Roller Bearing Company of America, Inc., Oxford CT 06478 (US)
(72) Inventor: Lopes, Carla, 25200 Montbeliard (FR); Tschopp, Ruedi, 2802 Develier (CH)
(74) Representative: Schwabe - Sandmair - Marx

(57) **Abstract**

A spherical plain bearing includes an outer ring (4) formed from metal and having a concave first bearing surface, and an inner ring (12) having a convex second bearing surface in sliding disposition to the first bearing surface. One of the rings is made from titanium alloy and has a treated bearing surface (18). The other bearing surface (16) has a lubrication liner (20). The liner may be made from PTFE, such as a fabric of PTFE and polyaramid fibers. The treated surface may be TiN provided by physical vapor deposition.

## Description

### BACKGROUND

This invention relates to spherical plain bearings, and in particular to spherical plain bearings for high load applications.

Titanium alloys are known for use in making spherical plain bearings. However, it is known in the art that the bearing surfaces of such bearings are subject to premature wear and fretting.

Based on the foregoing, it is the general object of this invention to provide a bearing that improves upon prior art bearings.

### SUMMARY OF THE INVENTION

The present invention resides in one aspect in a spherical plain bearing that comprises an outer ring member formed from metal and having a concave first bearing surface, a lubrication liner on the first bearing surface, and an inner ring member formed from a titanium alloy and having a convex second bearing surface in sliding disposition to the first bearing surface.

In optional embodiments, the second bearing surface may be a treated surface, and, optionally, the liner may comprise PTFE, such as a fabric of PTFE and polyaramid fibers. The treated surface may comprise TiN applied by physical vapor deposition (PVD).

### BRIEF DESCRIPTION OF THE DRAWINGS

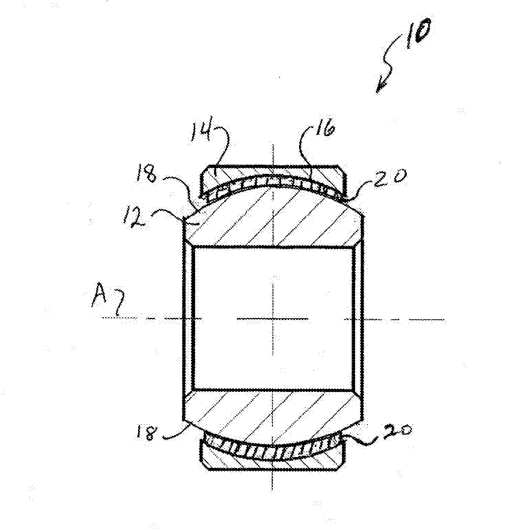

Fig. 1 is a schematic cross-sectional view of a bearing according to one a particular embodiment of the present invention.

### DETAILED DESCRIPTION OF THE INVENTION

The present invention provides a spherical plain bearing that comprises an outer ring member and an inner ring member formed from a titanium alloy and having a convex second bearing surface in sliding disposition to the first bearing surface. One of the members comprises a titanium alloy and has a treated surface; the other member has a lubrication liner on the bearing surface. Thus, the treated bearing surface slides upon a lubrication liner. The treated surface may comprise TiN applied by physical vapor deposition (PVD).

A spherical plain bearing according to one illustrative embodiment of this invention is shown in Fig. 1. Bearing 10 comprises an inner ring member 12 and an outer ring member 14. Outer ring member 14 has an annular configuration with a central axis A and a spherical concave bearing surface 16 that faces the central axis. The inner ring member 12 has a spherical convex bearing surface 18 that is sized to slidably engage surface 16, with optional allowance for a liner between surface 16 and surface 18. The outer ring member may be formed from two mating parts so that it can be assembled around the inner ring member, as is known in the art.

Outer ring member 14 is made from any suitable material, such as a metal. Inner ring member 12 is made from a titanium alloy. In one embodiment, the titanium alloy is TA6V alpha-beta alloy, which contains 6 % A1 and 4 % V, by weight. Optionally, outer ring member 14 may also comprise titanium or may be formed from an alloy that principally comprises titanium.

The bearing surface on the titanium alloy bearing member is treated to improve its hardness. Thus, at least surface 18 is treated; optionally, surface 16 is treated as well. The treatment may comprise the application of a layer of titanium nitride (TiN) by PVD (physical vapor deposition).

Bearing 10 comprises a self-lubrication liner 20 on surface 16, so that the liner 20 is situated between surfaces 16 and 18. The liner 20 comprises a layer of durable, low-friction material, for example, a fabric of polymeric low-friction fibers disposed with the fabric weave direction aligned with the axis A and that may have a thickness of about 0.4 millimeters (mm). The liner 20 provides the bearing 10 a self-lubricating characteristic. In one embodiment, the liner 20 comprises Uniflon® E self-lubricating fabric that complies with the SAE-AS81820 standard. Uniflon® E fabric comprises fibers of PTFE and polyaramid and is saturated with a phenolic resin composition. Uniflon® E fabric is useful in various environments and extreme temperatures, typically about -30°C to about +210°C. Because of its composition, Uniflon® E material is highly resistant to heat, abrasion, breaking and compression. Uniflon® E fabric contains a high proportion of PTFE fibers, which have superb slip properties, and comprises a matrix chemically linked by a resin with a low coefficient of friction. While Uniflon® E fabric has been shown and described, the present invention is not limited in this regard as other friction reducing liner materials known to those skilled in the art to which the present invention pertains, such as PTFE, nylon, etc., can be substituted without departing from the broader aspects of the present invention.

A liner and a surface-treated titanium alloy bearing member as described above can substantially eliminate the fretting phenomenon. A liner ameliorates the major disadvantage of material transfer resulting from metal-to-metal contact. In addition, the liner protects the surface treatment. One way the liner provides protection is by absorbing particles that are likely to stick to the bearing surface, such as internal particles (e.g., hard and abrasive particles of titanium oxides such as TiO, TiO₂, and/or Ti₂O₃) or contaminants from sources external to the bearing. A liner can also contribute to bearing life by absorbing shock under severe vibration conditions.

The surface treatment of the titanium alloy bearing(s) and the liner between the bearing surfaces each help make the bearing more forgiving, reduces friction and extends bearing life. As a result, a bearing comprising a titanium alloy inner bearing having a treated surface and lubrication liner can be lighter than other bearings designed to provide the same life and bearing capacity.

In use, each of the first bearing and the second bearing are connected to devices that are intended to move relative to each other. A bearing as described herein finds utility in high-load aerospace applications.

The terms "first," "second," and the like, herein do not denote any order, quantity, or importance, but rather are used to distinguish one element from another. The terms "a" and "an" herein do not denote a limitation of quantity, but rather denote the presence of at least one of the referenced item.

Although the invention has been described with reference to particular embodiments thereof, it will be understood by one of ordinary skill in the art, upon a reading and understanding of the foregoing disclosure, that numerous variations and alterations to the disclosed embodiments will fall within the spirit and scope of this invention and of the appended claims.

## Claims

1. A spherical plain bearing comprising:
a first ring member comprising an outer ring member having a concave first bearing surface;
a second ring member comprising an inner ring member having a convex second bearing surface in sliding disposition to the first bearing surface;
wherein one of the first ring member and the second ring member comprises a titanium alloy and has a treated bearing surface, and the other of the first ring member and the second ring member has a lubrication liner.

2. The bearing of claim 1, wherein second ring member comprises the titanium alloy and
wherein the first ring member comprises the lubrication liner on the first bearing surface.

3. The bearing of claim 1, wherein the treated surface comprises TiN applied by PVD.

4. The bearing of claim 1, wherein the lubrication liner comprises PTFE.

5. The bearing of claim 4, wherein the lubrication liner comprises a fabric comprising PTFE and polyaramid fibers, the fabric being saturated with a phenolic resin.

6. The bearing of claim 1, wherein the inner ring is made from a titanium alloy comprising about 6 % Al and 4 % V, by weight.

7. The bearing of claim 1, wherein the second bearing surface is treated by PVD application of TiN and wherein the lubrication liner comprises a fabric comprising PTFE and polyaramid fibers, the fabric being saturated with a phenolic resin.

8. The bearing of claim 1, wherein the inner ring is made from a titanium alloy comprising about 6 % Al and 4 % V, by weight, and wherein the second bearing surface is treated by PVD application of TiN, and wherein the liner comprises a fabric comprising PTFE and polyaramid fibers, the fabric being saturated with a phenolic resin.

9. The bearing of claim 1, wherein the inner ring is made from a titanium alloy comprising about 6 % Al and 4 % V, by weight, and wherein the second bearing surface is treated by PVD application of TiN, and wherein the liner is on the first bearing surface and comprises a fabric comprising PTFE and polyaramid fibers, the fabric being saturated with a phenolic resin.

10. The bearing of claim 1, wherein first ring member comprises the titanium alloy and
wherein the second ring member comprises the lubrication liner on the second bearing surface.
